# EUROPEAN PATENT SPECIFICATION

(11) **EP 1 893 850 B1**
(45) Date of publication and mention of the grant of the patent: **14.10.2009**
(21) Application number: 06747921.2
(22) Date of filing: 14.06.2006
(51) Int. Cl.: F01M 13/02

(54) **TURBOCHARGER INTAKE AIR CHAMBER PROVIDED WITH AIR INLET FROM CRANKCASE BLOWBY VENTILATION (CCV)**
MIT EINEM LUFTEINLASS VON DER GESCHLOSSENEN KURBELGEHÄUSEENTLÜFTUNG VERSEHENE TURBOLADEREINLASSLUFTKAMMER
CHAMBRE D'ASPIRATION D'AIR DE TURBOCOMPRESSEUR POURVUE D'UNE ENTREE D'AIR PROVENANT D'UNE VENTILATION A CARTER FERME (CCV)

(30) Priority: 15.06.2005 SE 0501390
(43) Date of publication of application: 05.03.2008
(73) Proprietor: VOLVO LASTVAGNAR AB, 405 08 Göteborg (SE)
(72) Inventor: RYRHOLM, Reimer, S-442 75 Lycke (SE); LEIL, Garry, S-444 45 Stenungsund (SE); HÄRRÖD, Peter, SE-425 43 Hisings Backa (SE)
(74) Representative: Fröhling, Werner Otto
(86) International application number: PCT/SE2006/000729
(87) International publication number: WO 2006/135327

(56) References cited:
- EP-A1- 0 860 589
- DE-A1- 10 260 778
- DE-A1- 10 260 779
- DE-C1- 19 627 412
- US-A- 3 418 986

## Description

### Field of the invention

The present invention relates to a crankcase ventilation system (CCV) and in particular to a solution for reducing risk of ice forming in the system.

### Background of the invention

Crankcase blow-by gases are produced when combustion gases are blown past the piston rings in the crankcase.

To reduce emissions to the atmosphere from engine exhausts of vehicles, crankcase blow-by is routed back into the combustion chamber of the engine. This is done by mixing the crankcase blow-by gas with intake air in a mixing chamber prior to a turbo charger of the engine; often an oil and water separator is present in between the crankcase blow-by ventilation outlet and the turbo charger in order to reduce the amount of water and oil present in the air forwarded towards the combustion chamber.

However, even if a separator is used, the blow-by air contains water/moisture which can freeze to ice if the vehicle is in a freezing environment and this ice can form pieces of ice chunks within the system. Often, ice can form in the pipes or mixing chamber stopping or hindering air flow and/or even possibly causing damage to components of the turbo. For instance ice pieces formed within the pipes or mixing chamber can move into the turbo and hit turbo charger turbine blades and damaging them. The forming of ice can occur during standstill of the vehicle when the engine is turned off, or in cold environments ice may form even when the engine is operating.

In EP 1515010 an electrical heater is used for heating the gases so as to reduce the risk of water condensing within the mixing chamber. However, this system have limitations in that they need power from the engine, and may in some circumstances not be able to ensure that no water condenses (such as at very cold environments).

In SE 200400896 air is also heated but in this case the air is pre heated by coming in thermal contact with an oil sump. Also in this case there is a risk that the heating is not efficient enough to keep the air from not condensing at very cold temperatures.

US 3,418,986 A discloses an air intake chamber for a turbo charger of a vehicle engine, comprising a first air inlet from an external air source and a second air inlet from a crankcase blow-by ventilation of the engine. An opening of the second air inlet is positioned at least partly in an upper half of the chamber and close to the air outlet of the chamber.

### Summary of the invention

It is an object of the present invention to remedy some of these problems by providing blow-by gases to a turbo in such a way that water condensing is reduced to a level where it is of minimal risk for the turbo and to ensure that the gas flow carries any possible condense into the turbo blade before it has a chance to meet a cold surface or freeze.

This object is achieved with an air intake chamber according to claim 1.

According to the present invention, an air intake chamber for a turbo charger of a vehicle engine, comprises a first air inlet from an external air source and a second air inlet from a crankcase blow-by ventilation of the engine An opening of the second air inlet is positioned in the chamber in a position where possible water droplets coming from the opening are swept along with a general air flow within the chamber towards the turbo charger. The air inlet opening is positioned with the opening facing substantially towards the turbo charger so as to produce an air flow out from the opening directed substantially in a similar direction as a general air flow direction within the chamber towards the turbo. The opening is positioned in an upper quarter position and adjacent to an air outlet of the chamber.

The air inlet opening may be positioned upstream of the turbo charger in the general air flow direction within the chamber so as to have a substantially free passage for the flow of air from the air inlet opening towards an air intake port of the turbo charger.

The chamber may comprise a closed crankcase ventilation (CCV) hose and the hose may be made of at least one of rubber, plastic, metal, or composite.

The chamber may comprise the turbo charger. The second air inlet opening may be incorporated into the turbo charger. The chamber may be an air conduit adjacent to the turbo charger.

The chamber second air inlet opening may be dimensioned so as to produce an air flow out from the inlet opening with an air speed of the same order as the general air flow speed within the chamber.

These and other aspects of the invention will be apparent from and elucidated with reference to the embodiments described hereinafter.

### Brief description of the drawings

In the following the invention will be described in a non-limiting way and in more detail with reference to exemplary embodiments illustrated in the enclosed drawings, in which:
Fig. 1 illustrates a CCV system according to the present invention;
Fig. 2 is a perspective view of a CCV hose according to the present invention;
Fig. 3a is a schematic side view and Fig. 3b is a schematic top view of a CCV hose according to the present invention;

### Detailed description of the invention

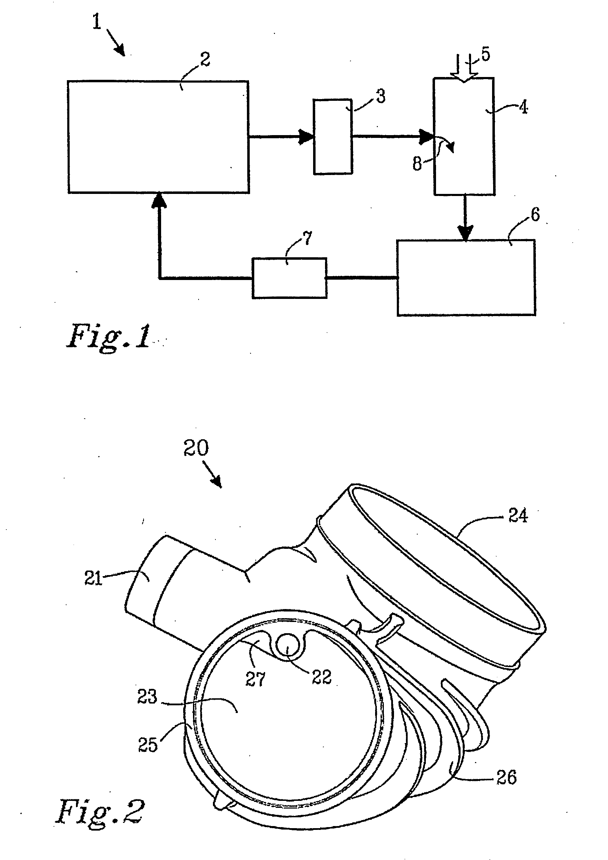

Fig. 1 illustrates a schematic air intake system 1 according to the present invention with a crankcase blow-by air ventilation of an engine 2. The crankcase blow-by air is connected to a separator 3, separating oil and water from crankcase ventilation air before entering into a mixing chamber 4 positioned before a turbo charger intake. A crankcase blow-by air inlet 8 in the mixing chamber 4 is positioned within the mixing chamber 4 and provides air from the crankcase in to the mixing chamber 4. Air 5 from an external source enters in to the mixing chamber 4 and mixes with the crankcase blow-by air. The turbo 6 compresses the air before entering in to a combustion chamber, possibly via an optional charge air cooler (CAC) 7.

In order to reduce the risk of ice forming in the mixing chamber 4 the air coming from the crankcase may be supplied through the crankcase blow-by air inlet 8 in the mixing chamber 4 positioned close to the turbo and let into the mixing chamber 4 in such a way that the probability of any droplets of water coming out from the inlet 8 into the mixing chamber 4 hitting a cold surface within the mixing chamber 4 is substantially reduced. For instance by positioning the crankcase air inlet 8 high within the mixing chamber 4, droplets entering into the mixing chamber 4 from the crankcase inlet 8 will travel a significant distance before hitting any surface. During the flight of the water droplets they will pick up speed and travel in the same direction as the general air flow of the external air within the mixing chamber, and if the traveling distance is sufficiently long, the water droplets will acquire the same speed and direction of travel as the general air flow and thus travel in to the turbo charger instead of hitting any surfaces within the mixing chamber 4.

By positioning the crankcase inlet 8 in the mixing chamber 4 with an opening towards the turbo 6, air coming from the inlet will already upon exit into the mixing chamber 4 have a direction of travel substantially in the same direction as the external air and travel substantially unhindered to the turbo charger, even further reducing the risk of water droplets hitting any surface. The invention may be further improved by providing the crankcase blow-by air inlet 8 with an opening diameter arranged so as to force air exiting from this inlet 8 to have a speed similar to the general air speed within the mixing chamber 4.

Fig. 2 shows an example of the present invention in the form of a CCV (CrankCase Ventilator) hose 20 with an air conduit connector 21 from the crankcase (or any other suitable intermediate step) of the engine 2. The air from the crankcase is let in through an internal crankcase inlet 22 into a mixing chamber 23, where the crankcase air is mixed with air from outside entering into an external air intake 24. The CCV hose 20 is connected to the turbo with an air outlet 25. In order to reduce the risk of condensing fluid being able to come into contact with possible cold surfaces, the crankcase inlet opening 22 is positioned close to the air outlet 25 of the hose 20 in order to be close to the turbo charger. The position of the inlet 22 should be close to the turbo, however the distance depends on the design of the opening of the inlet 22 and other parameters such as e.g. the air speed of the external air. Air entering into the mixing chamber 23 should travel substantially unhindered towards the turbo, whereas moist air striking cold surfaces may condense, form water droplets, and form ice which can be dislodged and travel into the turbo and possibly damaging essential parts of the turbo. The inlet 22 may also be positioned in such a way that the direction of travel of air out from the inlet 22 is in the general direction of travel of air passing from the external air inlet 24 to the air outlet 25, thus the air coming from the crankcase will already be in the direction towards the turbo.

The crankcase inlet 22 is dimensioned so as to produce a flow of air out from the inlet 22 with a speed in the same order as the air coming from the external air inlet 24. This ensures that droplets falling from the crankcase inlet 22 or moisture in the air from the crankcase inlet 22 are swept away by the air from the external air intake before droplets or moist air hit any cold surface. This effect is enhanced by the position of the crankcase inlet 22 in the upper part of the mixing chamber 23 and close to the air outlet 25. Droplets falling down from the crankcase 22 inlet has a long distance to travel before hitting any surface and since the inlet 22 is close to the outlet 25, the air speed is high and the travel distance to the turbine blades of the turbo is short. Also due to the position of the inlet 22 with air exiting already in the same general direction of travel as mentioned above, the risk of water droplets hitting a cold surface and forming ice is reduced.

If water is allowed to condense onto cold surfaces within the mixing chamber, the water may gather at a bottom part of the mixing chamber and form ice. The water could also form ice locally around or close to the point of condensing.

Water hitting the turbine blades does not pose as big a threat for the blades; however, even if the water droplets freeze during the flight from the inlet 22 to the compressor blades of the turbo charger they will be small and rather be in the character of snow than as pieces of ice. Therefore the risk of damaging the turbine blades of the turbo is greatly reduced as compared to conventional techniques.

The hose 20 may be made of any suitable material, such as, but not limited to, rubber, plastic, metal, or composite.

Often CCV hoses have bends and air coming around such a bend 26 will become turbulent and in the example as shown in Fig. 2 the crankcase inlet 22 and associated tubing 27 may steer the external air and reduce the turbulence, even more decreasing the risk of water condensing and forming water/ice within the mixing chamber. If water droplets coming out from crankcase inlet 22 encounter turbulence it is possible that instead of being forced along the general direction of air travel the water droplets are sprayed around within the mixing chamber 23, condensing onto the inner walls of the chamber 23 and, if the outside temperature is below zero degrees Celsius, forming ice which eventually can break loose and travel into the turbo charger 6 damaging parts within the turbo 6.

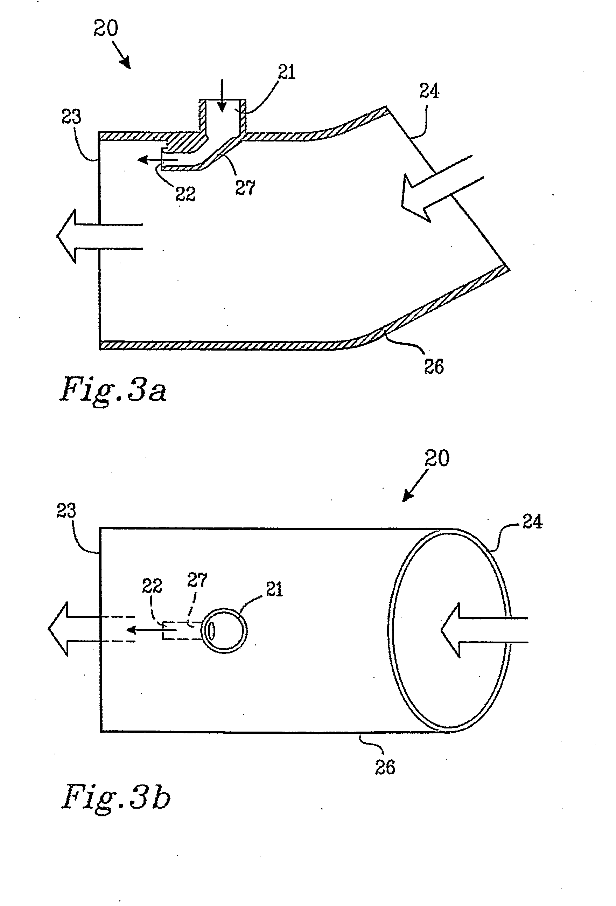

Fig. 3a and 3b shows a schematic side and top view respectively of the CCV hose 20 from Fig. 2. As seen in the figures 3a and 3b the crankcase inlet 22 is positioned close to the hose air outlet 25 and in a high position within the mixing chamber 23 as discussed above.

Other designs of a hose with the solution according to the present invention may be realized as long as the basic functionality of administering the air from the crankcase close to the turbo charger in a direction towards the turbo and at a position where droplets coming out from a crankcase inlet 22 travels a distance before hitting any cold surface is provided.

Even though the current invention can operate without external heating of the crankcase air and/or mixing chamber it may be used together with such heating if so is required by regulations, redundancy, or safety reasons at extreme temperature conditions.

Also, in order to further reduce the risk of condensed water to build up close to the turbo charger 6, a back drop may be provided in the conduit between the separator 3 and the CCV hose 20, this back drop enables condensed water to flow back to the separator 3. A small amount of fluid may condense during standstill of the engine between the air conduit connector 21 and the crankcase inlet 22, however the amount of water is very small and part of this may be trapped between the connector 21 and inlet 22. Any fluid entering the mixing chamber 23 may form ice ; however the risk of this small amount of ice damaging the turbine blades of the turbo charger 6 is small.

With mixing chamber is meant only a chamber where the two flows of air, from the crankcase and from the outside source, may mix and/or travel together depending on how the flow is steered. Mixing, in the literal sense, of the two different air flows is not necessary for the invention.

However, the invention is not limited to an inlet 22 in a CCV hose, the inlet can actually be incorporated into the turbo charger housing itself or into any air conduit transporting air to the turbo and in a position nearby the turbo.

In this document the words "gas" and "air" has been used in a broad sense, meaning that they both contain a mixture of atoms, molecules, and/or ions and with different compositions (also varying over time) but the actual compositions are not relevant for the present invention.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims and that several "means" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. An air intake chamber, for a turbo charger (6) of a vehicle engine, comprising a first air inlet (24) from an external air source and a second air inlet (21) from a crankcase blow-by ventilation of said engine, wherein an opening (22) of said second air inlet (21) is positioned in said chamber (23) in a position where possible water droplets coming from said opening (22) are swept along with a general air flow within said chamber (23) towards said turbo charger (6), and wherein in a working state air inlet opening (22) is positioned with said opening (22) facing substantially towards said turbo charger (6) so as to produce an air flow out from said opening (22) directed substantially in a similar direction as a general air flow direction within said chamber (23) towards said turbo charger (6), and wherein said opening (22) is positioned at least partially in an upper half and close to an air outlet (25) of said chamber (23), **characterized in that** said opening (22) is positioned in an upper quarter position and adjacent to said air outlet (25) of said chamber (23).

2. The chamber (23) according to claim 1, wherein said air inlet opening (22) is positioned upstream of said turbo charger (6) in the general air flow direction within said chamber (23) so as to have a substantially free passage for the flow of air from said air inlet opening (22) towards an air intake port of said turbo charger (6).

3. The chamber (23) according to claim 1 or 2, wherein said chamber (23) comprises a closed crankcase ventilation (CCV) hose (20).

4. The chamber (23) according to claim 3, wherein said hose (20) is made of at least one of rubber, plastic, metal, or composite.

5. The chamber (23) according to claim 1 or 2, wherein said chamber (23) comprises said turbo charger (6).

6. The chamber (23) according to claim 5, wherein said second air inlet opening (22) is incorporated into said turbo charger (6).

7. The chamber (23) according to claim 1 or 2, wherein said chamber (23) is an air conduit adjacent to said turbo charger (6).

8. The chamber (23) according to any of claims 1 to 7, wherein said second air inlet opening (22) is dimensioned so as to produce an air flow out from said inlet opening (22) with an air speed of the same order as the general air flow speed within said chamber (23).

## Patentansprüche

1. Lufteinlasskammer für einen Turbolader (6) eines Kraftfahrzeugmotors, mit einem ersten Lufteinlass (24) von einer externen Luftquelle und einem zweiten Lufteinlass (21) von einer Kurbelgehäusedurchblasbelüftung des Motors, wobei eine Öffnung (22) des zweiten Lufteinlasses (21) in der Kammer (23) an einer Position angeordnet ist, an der mögliche Wassertropen, die aus der Öffnung (22) kommen, entlang einer Hauptluftströmung innerhalb der Kammer (23) in Richtung des Turboladers (8) mitgerissen werden, und wobei in einem Arbeitszustand die Lufteinlassöffnung (22) so angeordnet ist, dass die Öffnung (22) im Wesentlichen in Richtung des Turboladers (6) zeigt, um eine Luftströmung aus der Öffnung (22) zu erzeugen, die im Wesentlichen in einer ähnlichen Richtung wie eine Hauptluftströmungsrichtung innerhalb der Kammer (23) in Richtung des Turboladers (6) gerichtet ist, und wobei die Öffnung (22) wenigstens teilweise in einer oberen Hälfte und nahe an einem Luftauslass (25) der Kammer (23) angeordnet ist, **dadurch gekennzeichnet, dass** die Öffnung (22) an einer Position im oberen Viertel und angrenzend an den Luftauslass (25) der Kammer (23) angeordnet ist.

2. Kammer (23) nach Anspruch 1, wobei die Lufteinlassöffnung (22) stromaufwärts des Turboladers (6) in der Hauptluftströmungsrichtung innerhalb der Kammer (23) angeordnet ist, um einen im Wesentlichen freien Durchgang der Strömung der Luft aus der Lufteinlassöffnung (22) in Richtung eines Lufteinlasskanals des Turboladers (6) zu haben.

3. Kammer (23) nach Anspruch 1 oder 2, wobei die Kammer (23) einen Schlauch (20) für eine geschlossene Kurbelgehäuseventilation (CCV) umfasst.

4. Kammer (23) nach Anspruch 3, wobei der Schlauch (20) hergestellt ist aus wenigstens einem aus Kautschuk, Kunststoff, Metall oder Verbundmaterial.

5. Kammer (23) nach Anspruch 1 oder 2, wobei die Kammer (23) den Turbolader (6) umfasst.

6. Kammer (23) nach Anspruch 5, wobei die zweite Lufteinlassöffnung (22) in den Turbolader (6) eingebaut ist.

7. Kammer (23) nach Anspruch 1 oder 2, wobei die Kammer (23) eine an den Turbolader (6) angrenzende Luftleitung ist,

8. Kammer (23) nach einem der Ansprüche 1 bis 7, wobei die zweite Lufteinlassöffnung (22) so dimensioniert ist, dass eine Luftströmung aus der Einlassöffnung (22) mit einer Luftgeschwindigkeit erzeugt wird, die die gleiche Größenordnung hat wie die Hauptluftströmungsgeschwindigkeit innerhalb der Kammer (23).

## Revendications

1. Chambre d'admission d'air, pour turbocompresseur (6) d'un moteur de véhicule, comprenant une première entrée d'air (24) à partir d'une source d'air extérieur et une seconde entrée d'air (21) à partir d'une ventilation du carter dudit moteur, une ouverture (22) de ladite seconde entrée d'air (21) étant positionnée dans ladite chambre (23) dans une position où des gouttelettes d'eau possibles provenant de ladite ouverture (22) sont balayées à l'aide d'un écoulement d'air général dans ladite chambre (23) en direction dudit turbocompresseur (6), et dans laquelle dans un état actif ladite ouverture d'entrée d'air (22) est positionnée en ayant ladite ouverture (22) dirigée sensiblement en direction dudit turbocompresseur (6) de manière à produire un écoulement d'air sortant à partir de ladite ouverture (22) dirigé sensiblement dans une direction similaire à la direction d'écoulement général dans ladite chambre (23) en direction dudit turbocompresseur (6), et dans laquelle ladite ouverture (22) est positionnée au moins partiellement dans une moitié supérieure et proche de la sortie d'air (25) de ladite chambre (23), **caractérisée en ce que** ladite ouverture (22) est positionnée dans une position du quart supérieur et adjacente à ladite sortie d'air (25) de ladite chambre (23).

2. Chambre (23) selon la revendication 1, dans laquelle ladite ouverture d'entrée d'air (22) est positionnée en amont dudit turbocompresseur (6) dans la direction générale d'écoulement d'air dans ladite chambre (23) de manière à avoir un passage sensiblement libre pour l'écoulement d'air provenant de ladite ouverture d'entrée d'air (22) en direction d'un orifice d'admission d'air dudit turbocompresseur (6).

3. Chambre (23) selon la revendication 1 ou 2, ladite chambre (23) comprenant un tuyau souple de ventilation de carter (CCV) (20).

4. Chambre (23) selon la revendication 3, dans laquelle ledit tuyau souple (20) est constitué d'au moins un matériau parmi du caoutchouc, une matière plastique, un métal, ou un composite.

5. Chambre (23) selon la revendication 1 ou 2, ladite chambre (23) comprenant ledit turbocompresseur (6).

6. Chambre (23) selon la revendication 5, dans laquelle ladite seconde ouverture d'entrée d'air (22) est incorporée dans ledit turbocompresseur (6).

7. Chambre (23) selon la revendication 1 ou 2, ladite chambre (23) étant un conduit d'air adjacent audit turbocompresseur (6).

8. Chambre (23) selon l'une quelconque des revendications 1 à 7, dans laquelle ladite seconde ouverture d'entrée d'air (22) est dimensionnée de manière à produire un écoulement d'air sortant de ladite ouverture d'entrée (22) avec une vitesse d'air du même ordre de grandeur que la vitesse d'écoulement d'air général dans ladite chambre (23).
